# EUROPÄISCHE PATENTANMELDUNG

(11) **EP 2 206 806 A1**
(43) Veröffentlichungstag der Anmeldung: **14.07.2010**
(21) Anmeldenummer: 09000248.6
(22) Anmeldetag: 09.01.2009
(51) Int. Cl.: C23C 28/00, C23C 28/02

(54) **Zweilagige MCrAIX-Schicht mit unterschiedlichen Kobalt- und Nickelgehalten**

(71) Anmelder: Siemens Aktiengesellschaft, 80333 München (DE)
(72) Erfinder: Schmitz, Friedhelm, 46537 Dinslaken (DE); Stamm, Werner, Dr., 45481 Mülheim an der Ruhr (DE)

(57) **Zusammenfassung**

Zur Verbesserung sowohl der Oxidationsbeständigkeit als auch der thermomechanischen Beständigkeit wird eine zweilagige MCrAlX-Schicht vorgeschlagen, bei dem sich die Gehalte von Nickel- und Kobalt aber auch CR, Al, und Z deutlich unterscheiden.

## Beschreibung

Die Erfindung betrifft eine zweilagige MCrAlX-Schicht, bei der sich die Nickel- und Kobaltgehalte unterscheiden.

Im Heißgaspfad von Gasturbinen werden Ni- und Co-Basiswerkstoffe verwendet. Diese Werkstoffe weisen jedoch wegen ihrer Optimierung auf höchstmögliche Festigkeit häufig keine genügende Oxidations- und Hochtemperaturkorrosions-Beständigkeit im Heißgas auf. Die Werkstoffe müssen daher mit geeigneten Schutzbeschichtungen vor dem Heißgasangriff geschützt werden. Zur Steigerung der Turbineneintrittstemperatur wird außerdem auf thermisch höchst beanspruchten Komponenten zusätzlich noch eine keramische Schicht aus Zirkonoxid zur Wärmedämmung aufgebracht. Die sich darunter befindliche metallische Schicht dient als Haftschicht für die keramische Wärmedämmschicht und als Oxidationsschutzschicht für den Basiswerkstoff.

Zur Lösung dieses Problems werden, wie oben beschrieben, Schutzbeschichtungen auf die heißesten Komponenten mittels thermischer Spritzverfahren oder auch EB-PVD-Verfahren aufgebracht. Diese bestehen in der Regel aus sogenannten MCrAlX-Auflageschichten, die neben Ni und/oder Co noch Chrom, Aluminium, Silizium, Rhenium oder Seltene Erden wie Yttrium enthalten. Jedoch kann es bei weiter steigenden Oberflächentemperaturen an der Schutzschicht zu Schädigungen kommen, die zum Versagen der Schicht oder zum Abplatzen der Wärmedämmschicht führen. Es ist daher bei steigenden Temperaturen an der Schichtoberfläche eine Schutzschicht zu entwickeln, die unter diesen erschwerten Bedingungen eine verbesserte Oxidationsbeständigkeit, verbunden mit einer genügend guten thermomechanischen Beständigkeit besitzt. Dies kann nur durch eine sehr ausgewogene chemische Zusammensetzung der Schutzschicht erzielt werden. Insbesondere sind hier die Elemente Ni, Co, Cr, Al von Bedeutung. Da diese Elemente infolge von Diffusion auch in Wechselwirkung mit dem Basiswerkstoff stehen, ist dies ebenfalls zu berücksichtigen. Auf Grund der steigenden Rohstoffpreise, speziell der Sonderlegierungselemente, ist zusätzlich auf eine kostenoptimierte Zusammensetzung zu achten.

Aufgabe der Erfindung ist es, das oben genannte Problem zu lösen. Die Aufgabe wird gelöst durch ein Schichtsystem nach Anspruch 1 oder 2.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2: Ausführungsbeispiele des Schichtsystems,
- Figur 3: eine Gasturbine,
- Figur 4: perspektivisch eine Turbinenschaufel,
- Figur 5: perspektivisch eine Brennkammer und
- Figur 6: eine Liste von Superlegierungen.

Die Figuren und die Beschreibung dazu stellen nur Ausführungsbeispiele der Erfindung dar.

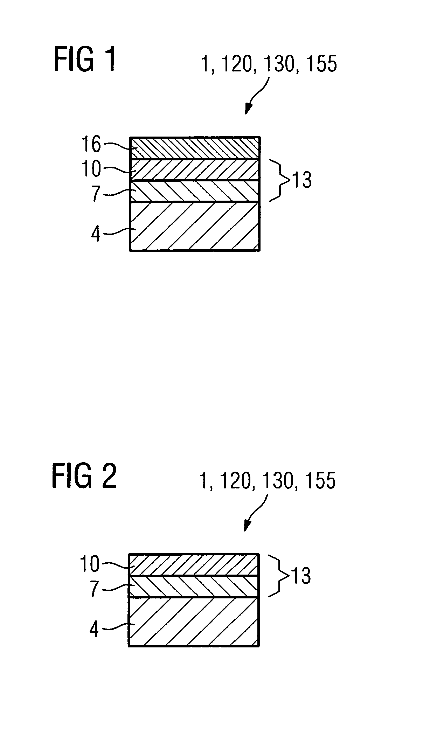

In Figur 1 ist ein erstes Beispiel gezeigt. Das Bauteil 1, 120, 130, 155 weist ein Substrat 4 auf.

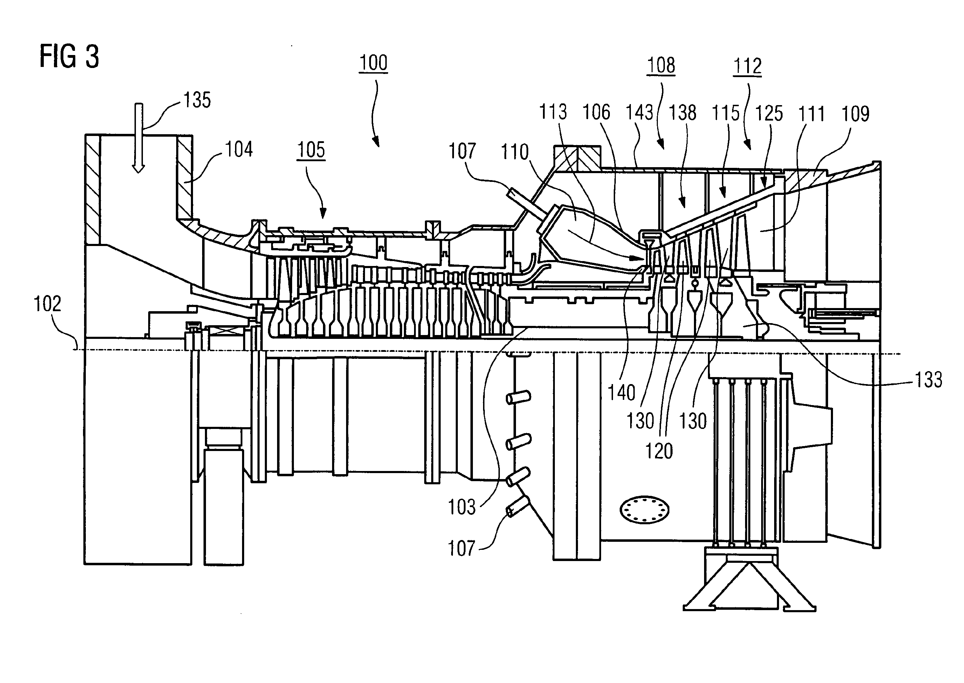

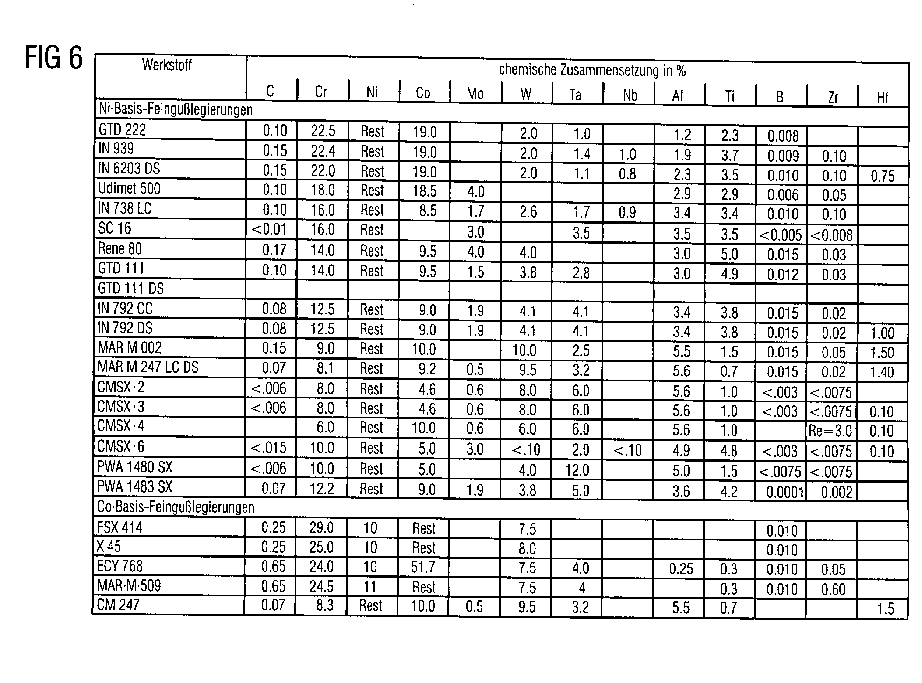

Insbesondere bei Gasturbinen 100 (Fig. 3) für Anwendungen bei hohen Temperaturen weist das Substrat 4 eine Superlegierung, insbesondere gemäß Figur 6 auf.
Auf dem Substrat 4 ist eine metallische Schutzschicht 13 vorhanden.

Erfindungsgemäß umfasst die metallische Schutzschicht 13 zwei verschiedene MCrAlX-Schichten 7, 10, wobei die äußere Schicht 10 einen höheren Kobaltgehalt aufweist.

Höherer Kobaltgehalt bedeutet mindestens einen relativen Unterschied von 20% bezogen auf den niedrigeren Kobaltwert.

Vorzugsweise ist auch der Nickelgehalt der äußeren Schicht 10 geringer als der Nickelgehalt der darunterliegenden Schicht 7.
Höherer Nickelgehalt bedeutet mindestens einen relativen Unterschied von 20% bezogen auf den niedrigeren Nickelgehalt.

Vorzugsweise besteht die metallische Schutzschicht 13 aus zwei verschiedenen MCrAlX-Schichten 7, 10.

Es wird eine metallische Schutzschicht 13 vorgeschlagen, die gegenüber den bisher verwendeten Schichten eine bessere Oxidationsbeständigkeit als die bisher verwendeten MCrAlX-Schichten bei gleichzeitig gleich gutem thermomechanischem Verhalten aufweist. Dies wird in der Weise erreicht, dass ein Duplex-Schichtsystem angewendet wird, welches den unterschiedlichen Anforderungen in Hinblick auf eine optimierte Diffusions-Wechselwirkung mit dem Basiswerkstoff aufweist und andererseits eine optimierte TGO-Schicht an der Phasengrenze zur Keramik ausbildet. Durch eine unterschiedliche chemische Zusammensetzung der beiden verwendeten MCrAlX-Legierungen wird dieses Ziel erreicht.

Die dem Basiswerkstoff (Substrat 4) naheliegende innere Schicht 7 weist in der chemischen Zusammensetzung des verwendeten Pulvers oder Ingots vorzugsweise folgende Grundzusammensetzung auf (in wt%): Ni etwa 38% bis etwa 66,6% und Co von 8% bis 22%. Diese Grundzusammensetzung führt dazu, dass trotz eines hohen Cr-Gehaltes von 21% bis 29% nur geringe oder keine α-Cr-Phasen auftretenden und eine gute Duktilität der Schicht erhalten bleibt. Der relativ hohe Cr- und/oder Y-Gehalt soll als Getter für Schwefel im Basiswerkstoff wirken und eine schädigende Wirkung auf die TGO verhindern. Der relativ niedrige Al-Gehalt von 4% bis 9% fördert das Duktilitätsverhalten der Schicht 7, führt aber auch zu einer geringen Interdiffusion mit dem Basiswerkstoff. Andererseits liegt er noch hoch genug, um die Lebensdauer einer Wärmedämmschicht 16 günstig zu beeinflussen, da genügend Al zur Nachdiffusion vorhanden ist. Zusätzlich fördert der hohe Cr-Anteil die Aluminiumoxidbildung. Die bei dieser Konzentration der Hauptlegierungsbestandteile in neu und betriebsbeanspruchten Zustand auftretenden Phasen sind γ (gamma), γ' und β (Beta).

Der Yttrium-Gehalt der inneren Schicht 7 soll vorzugsweise 0,4wt% bis 0,9wt% betragen und ebenfalls eine Getterwirkung für Schwefel darstellen. Darüber hinaus soll das Yttrium (γ) auch in die darüber liegende äußere Schicht 10 diffundieren können. Gegebenenfalls kann die Schicht auch noch Re bis zu 1% enthalten, um die Interdiffusion weiter zu verzögern.

Die darüber befindliche äußere MCrAlX-Schicht 10 weist eine im Rahmen der Fertigungstoleranzen vorzugsweise gleiche Dicke wie die erste Schicht 7 auf.
Die äußere Schicht (10) kann gleich dick oder deutlich dünner sein als die innere Schicht (7).
Diese Grundzusammensetzung führt in Verbindung mit einem abgesenkten Cr-Gehalt von vorzugsweise um 20wt% und einem Al-Gehalt von vorzugsweise um 11,5wt% zu einer ausgezeichneten Al₂O₃-Deckschichtbildung, die noch durch den geringen Gehalt von Y mit 0,1% - 0,2% hinsichtlich Ausbildung und Haftung unterstützt wird. Der niedrige Y-Gehalt vermeidet eine innere Oxidation des Yttriums und bildet in der Anfangsphase der Oxidation kein Yttriumaluminat auf der MCrAlX. Dies führt zu einem geringeren Schichtwachstum.

Optional ist die Zugabe von Silizium (Si) mit 0,2% - 0,4% enthalten in der äußeren Schicht 10).

Die Schicht 10 hat im Wesentlichen eine Phasenzusammensetzung von Gamma, Beta, ist thermisch stabil und vermeidet die Bildung spröder Phasen, was wiederum zu guten Duktilitätseigenschaften der MCrAlX-Schicht 10 führt.

Die Schutzschicht 13 weist zwei übereinanderliegende Schichten auf, vorzugsweise mit der Zusammensetzung von innerer Schicht 7 (in wt%):
Ni,
Co 8% - 22%
vorzugsweise 19% - 21%, ganz vorzugsweise 20%,
Cr 21% - 29%
vorzugsweise 23% - 25%, ganz vorzugsweise 24%,
Al 4% - 9%
vorzugsweise 6% - 8%, ganz vorzugsweise 7%,
Y 0,4 - 0,9%
vorzugsweise 0,4% - 0,6%, ganz vorzugsweise 0,5%,
Re 0% - 1,0%
vorzugsweise 0%
und
mit der Zusammensetzung von äußerer Schicht 10:
Co,
Ni 29% - 39%
vorzugsweise 34% - 36%, ganz vorzugsweise 35%,
Cr 17% - 24%
vorzugsweise 19% - 21%, ganz vorzugsweise 20%,
Al 9% - 14%
vorzugsweise 11% - 12%, ganz vorzugsweise 11,5%,
Y 0,05% - 0,5%
vorzugsweise 0,1% - 0,2%.

Nickel (bei Schicht 7) oder Kobalt (bei Schicht 10) bilden dabei vorzugsweise den Rest, so dass eine abschließende Auflistung gegeben ist.

Weitere Elemente wie Hf, Zr, P und andere Spurenelemente können in der äußeren Schutzschicht 10 bis zu einem Prozentsatz von 0,3% positive Eigenschaften durch gegenseitige Wechselwirkung bewirken. Jedoch sollte auf die Zugabe von Silizium (Si) vorzugsweise verzichtet werden.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

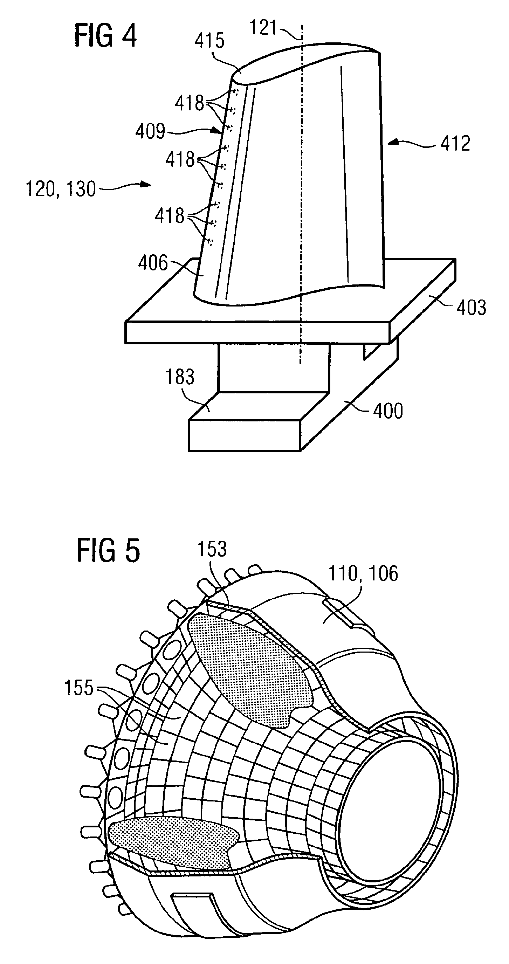

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), HVOF oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem (1, 120, 130, 150),
zumindest aufweisend
ein Substrat (4) und
eine zweilagige MCrAlX-Schicht (13),
die (13) zumindest aufweist:
eine äußere MCrAlX-Schicht (10) und
eine innere MCrAlX-Schicht (7),
wobei der Kobaltgehalt der äußeren MCrAlX-Schicht (10) höher ist als der Kobaltgehalt der inneren MCrAlX-Schicht (7).

2. Schichtsystem (1, 120, 130, 150),
zumindest aufweisend
ein Substrat (4) und
eine zweilagige MCrAlX-Schicht (13),
die (13) zumindest aufweist:
eine äußere MCrAlX-Schicht (10) und
eine innere MCrAlX-Schicht (7),
wobei der Nickelgehalt der äußeren MCrAlX-Schicht (10) niedriger ist als der Nickelgehalt der inneren MCrAlX-Schicht (7).

3. Schichtsystem nach Anspruch 1 oder 2,
bei dem die innere MCrAlX-Schicht (7) aufweist (in wt%):
Co: 8% - 22%, vorzugsweise 19% - 21%,
Cr: 21% - 29%, vorzugsweise 23% - 25%,
Al: 4% - 9%, vorzugsweise 6% - 8%,
Y: 0,4% - 0,9%, vorzugsweise 0,4% - 0,6%,
Re: 0% - 1,0%, vorzugsweise 0%,
Ni,
insbesondere Rest Nickel (Ni).

4. Schichtsystem nach Anspruch 1, 2 oder 3,
bei dem die äußere MCrAlX-Schutzschicht (10) folgende Zusammensetzung aufweist (in wt%):
Ni: 29% - 39%, vorzugsweise 34% - 36%,
Cr: 17% - 24%, vorzugsweise 19% - 21%,
Al: 9% - 14%, vorzugsweise 11% - 12%,
Y: 0,05% - 0,5%, vorzugsweise 0,1% - 0,2%,
Co,
insbesondere Rest Kobalt (Co).

5. Schichtsystem nach Anspruch 1, 2 oder 4,
bei dem die äußere NiCoCrAlX-Schicht (10) zumindest ein Element aus der Gruppe Hafnium (Hf), Zirkon (Zr), Phosphor (P) aufweist,
insbesondere mindestens 0,05wt%,
ganz insbesondere bis zu einem Prozentsatz von 0,3wt%, aufweist.

6. Schichtsystem nach Anspruch 1, 2, 3, 4 oder 5,
bei dem die MCrAlX-Schicht (13) nur aus zwei verschiedenen MCrAlX-Schichten (7,10) besteht.

7. Schichtsystem nach Anspruch 1, 2, 3, 4, 5 oder 6,
bei dem die innere MCrAlX-Schicht (7) die gleiche Schichtdicke aufweist wie die äußere MCrAlX-Schicht (10).

8. Schichtsystem nach Anspruch 1, 2, 3, 4, 5 oder 6,
bei dem die innere MCrAlX-Schicht (7) dicker ist als die die äußere MCrAlX-Schicht (10).

9. Schichtsystem nach Anspruch 1, 2, 3, 4, 5, 6, 7 oder 8, bei dem die MCrAlX-Schicht (7, 10) eine NiCoCrAlY-Schicht (7, 10) aufweist,
insbesondere daraus besteht.

10. Schichtsystem nach Anspruch 1, 2 oder 4,
bei dem die äußere Schutzschicht (10) kein Silizium aufweist.

11. Schichtsystem nach Anspruch 1, 3 oder 4,
bei dem der Nickelgehalt der äußeren MCrAlX-Schicht (10) niedriger ist als der Nickelgehalt der inneren MCrAlX-Schicht (7).

12. Schichtsystem nach Anspruch 2, 3 oder 4,
bei dem der Kobaltgehalt der äußeren MCrAlX-Schicht (10) höher ist als der Kobaltgehalt der inneren Schicht.

13. Schichtsystem nach Anspruch 1, 2, 3, 4, 5, 6, 7, 8, 9, 11 oder 12,
bei dem X = Yttrium (Y) ist.

14. Schichtsystem nach Anspruch 1, 2, 3, 4 oder 5,
bei dem eine äußere keramische Wärmedämmschicht auf der zweilagigen MCrAlX-Schicht (13) vorhanden ist.
